# EUROPÄISCHE PATENTSCHRIFT

(11) **EP 0 309 885 B1**
(45) Veröffentlichungstag und Bekanntmachung des Hinweises auf die Patenterteilung: **26.05.1993**
(21) Anmeldenummer: 88115474.4
(22) Anmeldetag: 21.09.1988
(51) Int. Cl.: G02B 6/42

(54) **Lasermodul und Verfahren zum Ankoppeln einer Glasfaser**
Laser module and method for coupling of an optical fiber
Module laser et méthode pour l'accouplement d'une fibre optique

(30) Priorität: 26.09.1987 DE 3732433
(43) Veröffentlichungstag der Anmeldung: 05.04.1989
(73) Patentinhaber: Alcatel SEL Aktiengesellschaft, D-70435 Stuttgart (DE); ALCATEL N.V., NL-1077 XX Amsterdam (NL)
(72) Erfinder: Schmid, Peter, D-7146 Tamm (DE)
(74) Vertreter: Gähr, Hans-Dieter, Dipl.-Ing. (FH)

(56) Entgegenhaltungen:
- EP-A- 0 111 263
- DE-A- 3 307 933
- DE-A- 3 411 896
- GB-A- 2 128 768

## Beschreibung

Die Erfindung betrifft ein Lasermodul der im Oberbegriff des Patentanspruchs 1 näher bezeichneten Ausführung. Derartige Lasermodule, die elektrische Eingangssignale in optische Ausgangssignale umwandeln, werden in optischen Nachrichten-Übermittlungssystemen verwendet.

Ein Lasermodul nach dem Oberbegriff des Anspruchs 1 ist bereits aus der DE-A-3 411 896 bekannt. Auf dem Boden eines hermetisch verschlossenen Gehäuses ist ein Peltierelement und auf diesem ein Metallblock befestigt, der einen in einer Nut sitzenden Chipträger mit darauf fixierter Laserdiode hat. Vor dieser ist auf dem Metallblock eine der Halterung eines Lichtwellenleiters dienende Kammer angeordnet. Zwei sich gegenüberstehende Seitenwände der Kammer haben je eine miteinander fluchtende Bohrung, durch welche sich eine den Lichtwellenleiter enthaltende Faserhülse erstreckt. Die Bohrungen sind im Durchmesser etwas größer als die Faserhülse, so daß das aus der Faserhülse herausragende Faserende des Lichtwellenleiters durch Auslenken der Faserhülse auf die Laserdiode justiert und die optimale Ankoppelposition durch Füllen der Kammer mit einem aushärtbaren Befestigungsmittel oder mit niedrigschmelzendem Lot fixiert werden kann.

Eine durch Fixierung der Faserhülse auftretende Dejustierung der optischen Ankopplung ist bei einem Ausführungsbeispiel noch nachträglich dadurch behebbar, daß der Chipträger mit der Laserdiode und die Kammer mit der darin befestigten Faserhülse einen relativ großen Abstand voneinander haben und die ein relativ langes Stück aus der Kammer hervorstehende Faserhülse mit dem Faserende des Lichtwellenleiters daher durch Verformen erneut auf die Laserdiode ausgerichtet werden kann.

Aus der DE 33 07 933 C2 ist ferner ein Lasermodul mit einer anderen Faserankopplung bekannt. Bei diesem Lasermodul ist auf dem Gehäuseboden ein Kühlelement und darauf die Wärmesenke mit dem Laser und der Ansteuerschaltung angeordnet. Das auf die aktive Fläche des Lasers justierte Glasfaserende ist gasdicht in eine Endhülse eingebettet, die ihrerseits hermetisch dicht in einer, eine Seitenwand des Gehäuses durchsetzenden Durchführungshülse befestigt ist. Die für die einzelnen Komponenten verwendeten Materialien sind so ausgewählt, daß sie denselben oder einen möglichst nur gering voneinander abweichenden Ausdehnungskoeffizienten haben. Damit soll gewährleistet werden, daß die beim Betrieb des Lasers entstehende Wärme keine Dejustierung des Faserendes verursacht. Die getrennte Anordnung von Laserträger und Faserhalterung bedeutet aber, daß bereits eine geringe unabsichtlich auf die Seitenwand des Gehäuses oder die Durchführungshülse einwirkende Druckkraft eine Dejustierung des Faserendes vor dem Laser und somit einen Funktionsausfall der Koppelanordnung verursachen kann.

Der Erfindung liegt die Aufgabe zugrunde, bei einem Lasermodul gemäß Oberbegriff des Patentanspruchs 1 eine Koppelanordnung mit genau justierbarem Faserende zu schaffen, die mechanisch robust und einfach herstellbar ist und hierfür ein geeignetes Verfahren anzugeben. Diese Aufgabe wird erfindungsgemäß durch die im kennzeichnenden Teil des Anspruchs 1 angegebenen konstruktiven Maßnahmen und die im Anspruch 10 angegebenen Verfahrenschritte gelöst. Vorteilhafte Ausgestaltungen sind den Unteransprüchen zu entnehmen.

Bei dem vorliegenden Lasermodul bilden der Laserträger und die Faserhalterung in vorteilhafter Weise eine kompakte, in sich starre Koppelanordnung. Die Wärmesenke mit der Laserdiode und ihrer Ansteuerschaltung und die in die Wärmesenke integrierten Fixierstellen der Faserendhülse befinden sich innerhalb des Gehäuses und sind äußerer Beeinflussung entzogen. Weitere Vorteile sind in der Beschreibung genannt.

Die Erfindung wird anhand von in Zeichnungen dargestellten Ausführungsbeispielen wie folgt näher erläutert. Es zeigen:
- Fig. 1: ein Lasermodul ohne Gehäusedeckel, teilweise geschnitten in perspektivischer Ansicht;
- Fig. 2: eine im Lasermodul gemäß Fig. 1 verwendete Wärmesenke, längsgeschnitten;
- Fig. 3: die Wärmesenke der Fig. 2 in der Draufsicht;
- Fig. 4: die Wärmesenke der Fig. 2 mit einer anderen Halterung der Faserendhülse;
- Fig. 5: einen bei der Wärmesenke gemäß Fig. 4 verwendeten Haltebügel in perspektivischer Ansicht.

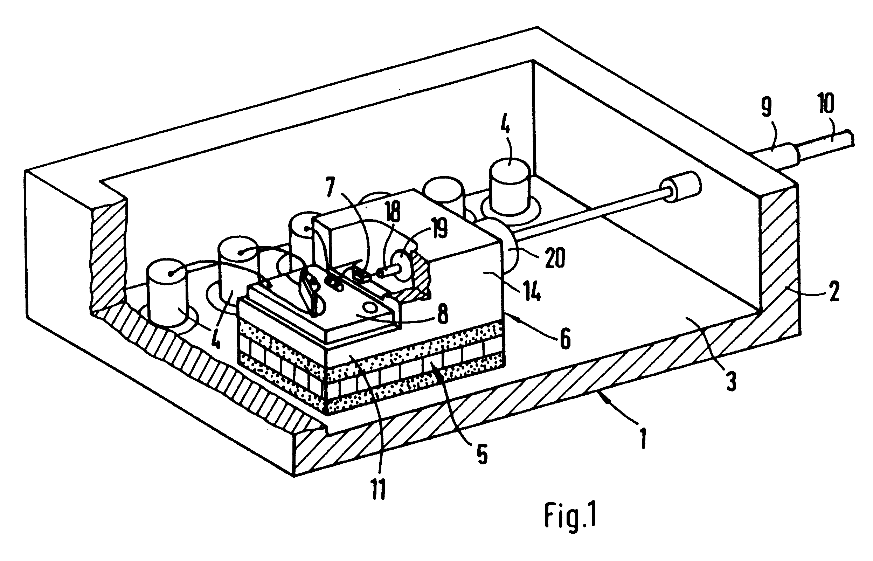

In Fig. 1 ist das Lasermodul insgesamt mit 1 bezeichnet. Es besteht aus einem dicht verschließbaren Gehäuse 2, dessen Boden 3 Kontaktstifte 4 für den elektrischen Anschluß des Lasermoduls 1 durchsetzen. Außerdem ist auf dem Gehäuseboden 3 ein Peltierelement 5 angeordnet und auf diesem eine aus einem Metallblock 6 bestehende Wärmesenke befestigt. Letztere trägt die Laserdiode 7 mit der für ihren Betrieb erforderlichen Ansteuer- und Regelschaltung 8. In einer Gehäusewand des Lasermoduls 1 ist ferner eine hermetisch dichte Durchführung 9 für einen als Monomodefaser ausgebildeten Lichtwellenleiter 10 befestigt.

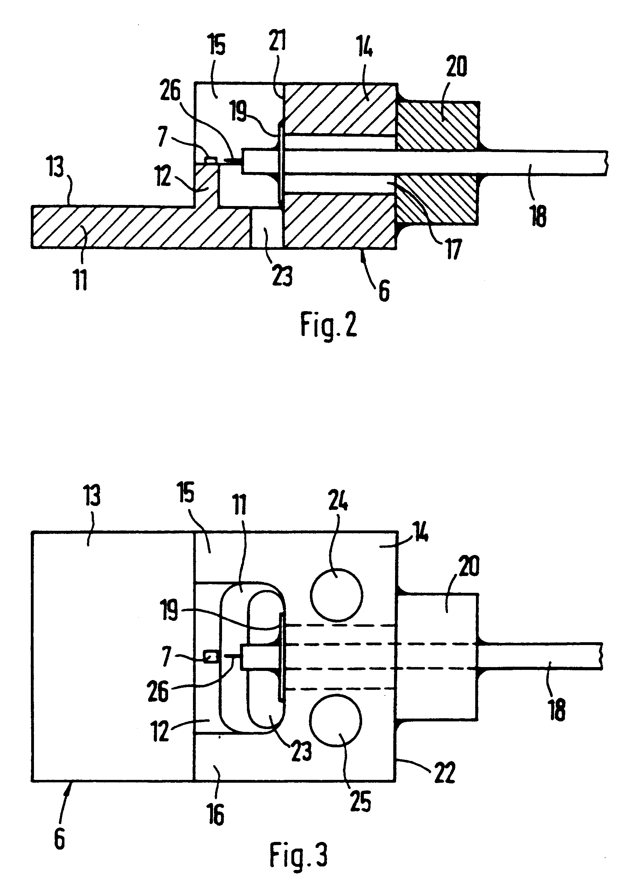

Der in den Fig. 2 und 3 im Detail dargestellte Metallblock 6 ist vorzugsweise einstückig aus Kupfer oder Stahl hergestellt. Er besteht aus einer im Grundriß rechteckigen Basisplatte 11, auf der ein stegförmiger Träger 12 mit darauf fixierter Laserdiode 7 angeordnet ist. Der etwa in der Mitte zwischen den Stirnseiten der Basisplatte 11 hochragende Träger 12 erstreckt sich quer zu deren Längsseiten. Hinter der Laserdiode 7 dient die Oberseite der Basisplatte 11 als Montagefläche 13 für die in Dick- oder Dünnfilmtechnik ausgeführte Ansteuer- und Regelschaltung 8. Mit Abstand vor der Laserdiode 7 ist weiterhin ein den Träger 12 überragender Befestigungsblock 14 auf der Basisplatte 11 angeordnet. Der Befestigungsblock 14 weist zwei Seitenwangen 15, 16 auf, deren Außenseiten mit den Längsseiten der Basisplatte 11 glatt abschließen und die sich bis zur die Montagefläche 13 begrenzenden Rückseite des Laserträgers 12 erstrecken.

Den Befestigungsblock 14 durchsetzt eine auf die Laserdiode 7 ausgerichtete Öffnung 17 mit hindurchgeführter Faserendhülse 18, welche die eingelötete Glasfaser enthält und die mittels separater Halterungen 19, 20 an der Vorder- und Rückseite 21, 22 des Befestigungsblockes 14 fixiert ist. Vor dem Befestigungsblock 14 ist im Bereich zwischen den Seitenwangen 15, 16 ein Längsschlitz 23 in die Basisplatte 11 geschnitten. Außerdem durchsetzen den Befestigungsblock 14 und die Basisplatte 11 von oben nach unten zwei weitere Öffnungen 24, 25, von denen zwischen der die Faserendhülse 18 enthaltenden Öffnung 17 und den Seitenwänden je eine angeordnet ist.

Die an der Vorderseite 21 des Befestigungsblockes 14 vorgesehene Halterung 19 besteht aus einem lose über die Faserendhülse 18 geschobenen Plättchen, das einerseits an der Faserendhülse 18 und andererseits am Befestigungsblock 14 fixiert ist. Ein derartiges, aus Metall bestehendes, im Umriß rundes oder eckiges Plättchen, das z.B. auch aus einer handelsüblichen Beilegscheibe bestehen kann, ist ebenso für die rückwärtige Halterung der Faserendhülse 18 verwendbar. Die rückwärtige Halterung 20 besteht jedoch vorzugsweise aus einem dickeren und mechanisch robusteren Halteteil, das die Faserendhülse 18 mit nur geringem Spiel umgibt und, wie noch ausführlicher erläutert wird, ebenfalls mit dem Befestigungsblock 14 und der Faserendhülse 18 verbunden ist.

Nach der Herstellung des Metallblockes 6 wird die Laserdiode 7 auf dem Träger 12 zentrisch zur Öffnung 17 des Befestigungsblockes 14 fixiert. Danach wird vom vorderen Ende her auf die separat vervollständigte Faserendhülse 18 die rückwärtige Halterung 20 übergeschoben und die Faserendhülse 18 anschließend mit dem Faserende 26 voraus soweit in die Öffnung 17 des Befestigungsblockes 14 eingesetzt, daß das Hülsenende an der Vorderseite 21 hervorsteht. Danach wird die vordere Halterung 19 in dem von Träger 12 und den Seitenwangen 15, 16 begrenzten Raum auf die Faserendhülse 18 geschoben und zwar soweit, bis sie an der Vorderseite 21 des Befestigungsblockes 14 zur Anlage kommt.

Die mechanisch exakte Ausrichtung des Faserendes 26 auf die aktive Fläche der Laserdiode 7 wird nun mit Hilfe eines Mikromanipulators vorgenommen, der die Faserendhülse 18 hinter der rückwärtigen Halterung 20 erfaßt und das Faserende 26 durch Verschieben in X-, Y-und Z-Richtung auf die Laserdiode 7 justiert. Ist die optimale Ankopplung erreicht, werden zweckmäßigerweise erst die vordere Halterung 19 am Befestigungsblock 14 und dann die Faserendhülse 18 an der Halterung 19 fixiert. Auf die Reihenfolge der Befestigung kommt es hier an sich nicht an, da durch das beispielsweise mittels Löten und/oder Laserschweißen erfolgende stoffschlüssige Verbinden der Teile miteinander wieder eine geringe Dejustage verursacht wird. Diese ist jedoch durch Nachjustieren behebbar, weil das relativ dünne Plättchen der Halterung 19, die gegenüber dem Durchmesser der Faserendhülse 18 eine verhältnismäßig große Öffnung 17 abdeckt, ein Gelenk darstellt, um das die Faserendhülse 18 verschwenkbar bleibt. Das Nachjustieren des Faserendes 26 auf die Laserdiode 7 erfolgt daher durch laterales Auslenken des Faserendhülsenendes mittels des Mikromanipulators.

Ist das Nachjustieren beendet und das Faserende 26 wieder optimal auf die Laserdiode 7 ausgerichtet, wird das hinter dem Befestigungsblock 14 lose mitverschobene Halteteil 20 an der Rückseite 22 fixiert und anschließend die Faserendhülse 18 an der Rückseite der hinteren Halterung 20. Danach erfolgt die Trennung der Kopplung zwischen Faserendhülse 18 und Mikromanipulator.

Eine während der Verbindung von Faserendhülse 18 und rückwärtiger Halterung 20 auftretende laterale Verschiebung der Faserendhülse ist um das Hebelverhältnis zwischen vorderer Halterung 19 und Faserende 26 sowie vorderer Halterung 19 und Fixierstelle der rückwärtigen Halterung 20 reduziert und hat deshalb am Faserende 26 praktisch keine die optimale Ankopplung beeinträchtigende Auswirkung mehr.

Außerdem sei erwähnt, daß auch die bei der Herstellung der Verbindungen zwischen Faserendhülse 18 und den Halterungen 19, 20 sowie bei deren Verbindungsherstellung mit dem Befestigungsblock 14 entstehenden thermischen Einflüsse keine negativen Auswirkungen auf die Ankopplung haben. Einerseits genügen wenige am Umfang von Faserendhülse 18 und Halterungen 19, 20 verteilte Fixierpunkte für deren Befestigung. Andererseits wirken der Längsschlitz 23 in der Basisplatte 11 und die sie durchsetzenden Öffnungen 24, 25 des Befestigungsblockes 14 als thermische Barrieren, die einen schädigenden Wärmefluß zur Laserdiode 7 verhindern.

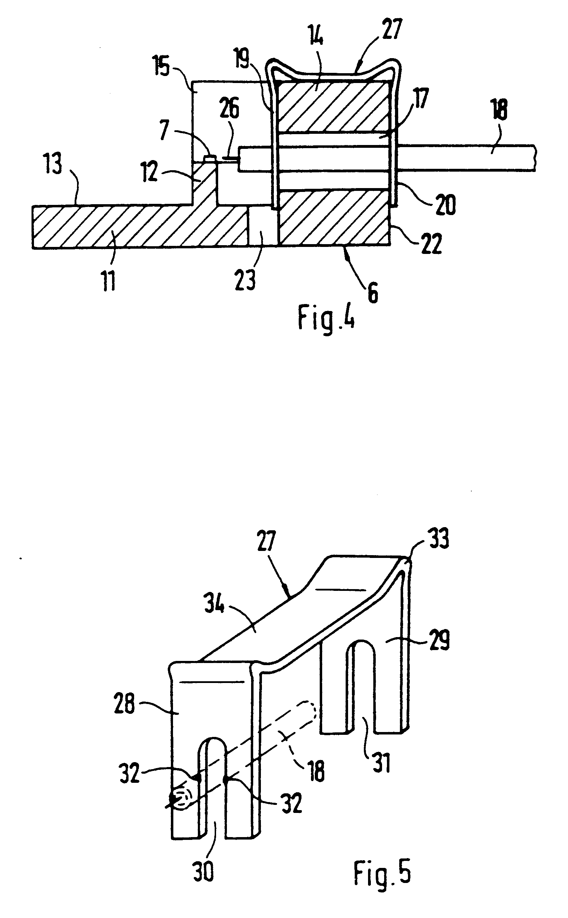

Gemäß den Fig. 4 und 5 besteht ein anderes Ausführungsbeispiel der Halterungen 19, 20 für die Faserendhülse 18 aus den geschlitzten Schenkeln 28, 29 eines U-förmigen Haltebügels 27. Die Schlitze 30, 31 sind an den freien Enden der Schenkel 28, 29 offen und haben wenigstens eine dem Außendurchmesser der Faserendhülse 18 entsprechende Breite. Der Haltebügel 27 besteht aus einem einfachen Blechstreifen und kann praktisch abfallos aus Bandmaterial gestanzt und gebogen werden. Dieser Haltebügel 27 reduziert und vereinfacht die Verfahrensschritte. Vor Montage des Haltebügels 27 wird die Faserendhülse 18 durch die Öffnung 17 des Befestigungsblockes 14 geschoben und anschließend der etwas federnde Haltebügel 27 selbsthemmend aufgesteckt, dessen Schenkel 28, 29 hierbei die Faserendhülse 18 übergreifen. Das Justieren des Faserendes 26 und Fixieren der aus Faserendhülse 18 und Haltebügel 27 bestehenden Anordnung geschieht im wesentlichen wie zuvor erläutert, wobei die Fixierstellen, z.B. Schweißpunkte 32, dort angebracht werden, wo die Mantelfläche der Faserendhülse 18 die Schenkel 28, 29 des Haltebügels 27 berühren. Um den Justiervorgang ggf. zu erleichtern kann es zweckmäßig sein, die Biegestellen 33 im Querschnitt ösenförmig auszubilden oder den die Schenkel 28, 29 an der Basis miteinander verbindenden Steg 34 schmaler zu bemessen als die Schenkel breit sind.

Die Wärmesenke weist relativ kleine Abmessungen auf, die bei der Basisplatte 11 des Metallblockes 6 in der Breite z.B. 5 mm, in der gesamten Länge 8 mm und in der Höhe ohne Befestigungsblock 1 mm und mit Befestigungsblock 14 nicht mehr als 5 mm betragen. Die Faserendhülse 18 ist entsprechend klein dimensioniert und weist bei einem Außendurchmesser von ca. 0,5 mm eine Länge von beispielsweise 10 mm auf. Dennoch handelt es sich um eine kompakte und robuste Anordnung mit zwei voneinander getrennten Fixierebenen der Faserendhülse 18. Die Wärmesenke kann sowohl innerhalb des Gehäuses zusammengesetzt als auch außerhalb des Gehäuses montiert und nach deren vollständiger Fertigstellung in das Gehäuse 2 eingesetzt und darin befestigt werden. Eine von außen auf das Gehäuse 2 oder die Durchführung 9 einwirkende Schub- oder Zugkraft hat auf die optische Kopplung keinen Einfluß.

## Patentansprüche

1. Lasermodul (1) mit einer in einem Gehäuse (2) befestigten Wärmesenke in Form eines Metallblocks (6), der einen Träger (12) mit darauf fixierter Laserdiode (7) und für die Ansteuer- und Regelschaltung (8) der Laserdiode (7) eine hinter dem Träger (12) vorgesehene Montagefläche (13) aufweist, die Bestandteil einer sich zu beiden Längsseiten des Trägers (12) erstreckenden Basisplatte (11) ist, auf der vor der Laserdiode (7) ein den Träger (12) überragender Befestigungsblock (14) angeordnet ist, der eine Öffnung (17) mit hindurchgeführter sowie am Befestigungsblock (14) fixierter Faserendhülse (18) und einen durch diese hindurchgeführten, vor der Laserdiode (7) endenden Lichtwellenleiter (Faserende 26) enthält,
**dadurch gekennzeichnet,** daß der Befestigungsblock (14) zwei Seitenwangen (15, 16) aufweist, die sich bis zur Rückseite des Laser-Trägers (12) erstrecken und daß die Fixierung der Faserendhülse (18) aus an der Vorder- und Rückseite (21, 22) des Befestigungsblockes (14) angebrachten, separaten Halterungen (19, 20) besteht.

2. Lasermodul nach Anspruch 1, dadurch gekennzeichnet, daß wenigstens die Halterung (19) an der Vorderseite (21) des Befestigungsblockes (14) aus einem über die Faserendhülse (18) geschobenen, gelochten Plättchen besteht, das einerseits an der Faserendhülse (18) und andererseits am Befestigungsblock (14) fixiert ist.

3. Lasermodul nach Anspruch 1, dadurch gekennzeichnet, daß die Halterung (20) an der Rückseite (22) des Befestigungsblockes (14) aus einem die Faserendhülse (18) mit geringem Spiel umgebenden Halteteil besteht, das mit der Faserendhülse (18) und mit dem Befestigungsblock (14) verbunden ist.

4. Lasermodul nach Anspruch 1, dadurch gekennzeichnet, daß vor dem Befestigungsblock (14) im Bereich zwischen den Seitenwangen (15, 16) ein Längsschlitz (23) in der Basisplatte (11) angeordnet ist.

5. Lasermodul nach Anspruch 1, dadurch gekennzeichnet, daß die Basisplatte (11) und den Befestigungsblock (14) zwischen der die Faserendhülse (18) enthaltenden Öffnung (17) und den Seitenwänden je eine weitere Öffnung (24, 25) von oben nach unten durchsetzt.

6. Lasermodul nach Anspruch 1, dadurch gekennzeichnet, daß der aus Basisplatte (11), Laser-Träger (12) und Befestigungsblock (14) mit Seitenwangen (15, 16) bestehende Metallblock (6) aus einem einstückigen Teil gefertigt ist.

7. Lasermodul nach Anspruch 1, dadurch gekennzeichnet, daß die Halterungen (19, 20) an der Vorder- und Rückseite (21, 22) des Befestigungsblockes (14) aus den geschlitzten Schenkeln (28, 29) eines über den Befestigungsblock (14) und die Faserendhülse (18) geschobenen Haltebügels (27) besteht.

8. Lasermodul nach Anspruch 7, dadurch gekennzeichnet, daß die Schenkel (28, 29) des Haltebügels (27) einerseits mit der Faserendhülse (18) und andererseits mit dem Befestigungsblock (14) stoffschlüssig verbunden sind.

9. Verfahren zum festen Ankoppeln des Faserendes eines in einer Faserendhülse gefaßten Lichtwellenleiters an eine Licht emittierende Laserdiode mittels eines Mikromanipulators bei einer Anordnung nach Anspruch 1, gekennzeichnet durch die Anwendung folgender Verfahrensschritte:
a) Überschieben der rückwärtigen Halterung (20) auf die Faserendhülse (18);
b) Einsetzen der Faserendhülse (18) in die Öffnung (17) des Befestigungsblockes (14) der Wärmesenke;
c) Überschieben der vorderen Halterung (19) auf die Faserendhülse (18) bis zur Anlage am Befestigungsblock (14);
d) Koppeln des Mikromanipulators mit dem rückwärtigen Ende der Faserendhülse (18) und Justieren des Faserendes (26) auf die Laserdiode (7);
e) Fixieren der vorderen Halterung (19) am Befestigungsblock (14);
f) Befestigen der Faserendhülse (18) an der vorderen Halterung (19);
g) Nachjustieren des Faserendes (26) auf die Laserdiode (7) durch laterales Auslenken des Endes der Faserendhülse (18) mittels des Mikromanipulators;
h) Fixieren der rückwärtigen Halterung (20) am Befestigungsblock (14);
i) Befestigen der Faserendhülse (18) an der rückwärtigen Halterung (20);
j) Trennen der Kopplung zwischen Faserendhülse (18) und Mikromanipulator.

## Claims

1. A laser module (1) comprising a heat sink in the form of a metal block (6) which is mounted in a housing (2) and has a support (12) with a laser diode (7) fixed thereon and, behind the support (12), a mounting surface (13) for the drive and control circuit (8) of the laser diode (7), said mounting surface (13) forming part of a base plate (11) which extends on both long sides of the support (12) and on which a mounting block (14) rising above the support (12) is disposed in front of the laser diode (7), said mounting block (14) containing an opening (17) through which passes a fiber end sleeve (18) which is fixed to the mounting block (14) and contains an optical waveguide (fiber end 26) ending in front of the laser diode (7),
**characterized in** that the mounting block (14) has two lateral cheecks (15, 16) which extend to the rear of the laser support (12), and that the end sleeve (18) is fixed by means of separate holders (19, 20) attached at the front and rear (21, 22) of the mounting block (14).

2. A laser module as claimed in claim 1, characterized in that at least the holder (19) at the front (21) of the mounting block (14) is formed by a perforated platelet which is slipped over the end sleeve (18) and is fixed both to the end sleeve and to the mounting block (14).

3. A laser module as claimed in claim 1, characterized in that the holder (20) at the rear (22) of the mounting block (14) is a holding member which surrounds the end sleeve (18) so that there is little play between them, and which is connected with the end sleeve (18) and the mounting block (14).

4. A laser module as claimed in claim 1, characterized in that in front of the mounting block (14) in the area between the lateral cheeks (15, 16), the base plate (11) has a longitudinal slot (23).

5. A laser module as claimed in claims 1, characterized in that between the opening (17) containing the end sleeve (18) and each of the sidewalls, a hole (24, 25) extends through the base plate (11) and the mounting block (14).

6. A laser module as claimed in claim 1, characterized in that the metal block (6), consisting of base plate (11), laser support (12), and mounting block (14) with lateral cheeks (15, 16), is formed as a single piece.

7. A laser module as claimed in claim 1, characterized in that the holders (19, 20) at the front and rear (21, 22) of the mounting block (14) are formed by the slitted legs (28, 29) of a U-shaped clip (27) fitted over the mounting block (14) and the end sleeve (18).

8. A laser module as claimed in claim 8, characterized in that the legs (28, 29) of the clip (27) are permanently connected with the end sleeve (18) and the mounting block (14).

9. A method of securely coupling the end of an optical waveguide enclosed in an end sleeve to a light-emitting laser diode by means of a micromanipulator in an arrangement as claimed in claim 1, characterized by the following steps:
a) slipping the rear holder (20) over the end sleeve (18);
b) inserting the end sleeve (18) into the opening (17) of the mounting block (14) of the heat sink;
c) slipping the front holder (19) over the end sleeve (18) until it rests against the mounting block (14);
d) coupling the micromanipulator with the rear end of the end sleeve (18) and aligning the fiber end (26) with the laser diode (7);
e) fixing the front holder (19) to the mounting block (14);
f) fastening the end sleeve (18) to the front holder (19);
g) realigning the fiber end (26) with the laser diode (7) by laterally deflecting the end of the end sleeve (18) by means of the micromanipulator;
h) fixing the rear holder (20) to the mounting block (14);
i) fastening the end sleeve (18) to the rear holder (20), and
j) uncoupling the end sleeve (18) from the micromanipulator.

## Revendications

1. Module à laser (1) comportant un réceptacle de chaleur fixé dans un boîtier (2) sous forme d'un bloc de métal (6) qui présente un appui (12), avec une diode laser (7) fixée dessus, et, pour le circuit de commande et de régulation (8) de la diode laser (7), une surface de montage (13) qui est prévue derrière l'appui (12) et qui fait partie d'une plaque de base (11) qui s'étend des deux côtés longitudinaux de l'appui (12) et sur laquelle est disposé, en avant de la diode laser (7), un bloc de fixation (14) qui vient plus haut que l'appui (12) et qui présente une ouverture (17) avec manchon d'extrémité de fibre (8) passant dans cette ouverture et fixé au bloc de fixation (14) et avec un guide d'ondes lumineuses (extrémité 26 de fibre optique) passant dans cette ouverture et se terminant devant la diode laser (7),
module caractérisé par le fait que le bloc de fixation (14) présente deux joues latérales (15, 16) qui s'étendent jusqu'à la face arrière de l'appui (12) du laser et par le fait que la fixation du manchon (18) de l'extrémité de fibre est constituée de supports distincts (19, 20) rapportés sur la face avant et sur la face arrière (21, 22) du bloc de fixation (14).

2. Module à laser selon la revendication 1, caractérisé par le fait qu'au moins le support (19) prévu sur la face avant (21) du bloc de fixation (14) est constitué d'une plaquette perforée, qui est enfilée sur le fourreau (18) d'extrémité de fibre et qui est fixé d'une part au fourreau (18) et d'autre part au bloc de fixation (14).

3. Module à laser selon la revendication 1, caractérisé par le fait que le support (20) prévu sur la face arrière (22) du bloc de fixation (14) est constitué d'une pièce d'arrêt qui entoure le fourreau (18) d'extrémité de fibre avec un faible jeu et qui est reliée avec le fourreau (18) et avec le bloc de fixation (14).

4. Module à laser selon la revendication 1, caractérisé par le fait qu'en avant du bloc de fixation (14), dans la zone située entre les joues latérales (15, 16), une fente longitudinale (23) est prévue dans la plaque de base (11).

5. Module à laser selon la revendication 1, caractérisé par le fait que la plaque de base (11) et le bloc de fixation (14) sont traversés, de haut en bas, entre l'ouverture (17) contenant le manchon (18) d'extrémité de fibre et chacune des joues latérales, par une autre ouverture (24, 25).

6. Module à laser selon la revendication 1, caractérisé par le fait que le bloc de métal (6) constitué de la plaque de base (11), de l'appui (12) du laser et du bloc de fixation (14) avec les joues latérales (15, 16) est fabriqué en une seule pièce.

7. Module à laser selon la revendication 1, caractérisé par le fait que les supports (19, 20) prévus sur la face avant et sur la face arrière (21, 22) du bloc de fixation (14) sont constitués des branches, fendues, (28, 29) d'un étrier d'arrêt (27) enfilé sur le bloc de fixation (14) et sur le fourreau (18) d'extrémité de fibre.

8. Module à laser selon la revendication 7, caractérisé par le fait que les branches (28, 29) de l'étrier d'arrêt (27) sont reliées, par continuité de matériau, d'une part avec le fourreau (18) d'extrémité de fibre et d'autre part avec le bloc de fixation (14).

9. Procédé de couplage stable de l'extrémité d'une fibre d'un conducteur d'ondes lumineuses tenu dans un fourreau d'extrémité de fibre avec une diode laser émettant une lumière au moyen d'un micromanipulateur dans le cas d'un dispositif conforme à la revendication 1, caractérisé par l'emploi des pas de procédé suivants:
a) enfiler le support arrière (20) sur le fourreau (18) d'extrémité de fibre;
b) insérer le fourreau (18) d'extrémité de fibre dans l'ouverture (17) du bloc de fixation (14) du réceptacle de chaleur;
c) enfiler le support avant (19) sur le fourreau (18) d'extrémité de fibre jusqu'à la butée contre le bloc de fixation (14);
d) coupler le micromanipulateur avec l'extrémité arrière du fourreau (18) d'extrémité de fibre et ajuster l'extrémité (26) de la fibre sur la diode laser (7);
e) fixer le support avant (19) au bloc de fixation (14);
f) fixer le foureau (18) d'extrémité de fibre au support avant (19);
g) reprendre l'ajustement de l'extrémité de fibre (26) sur la diode laser (7) en faisant dévier latéralement l'extrémité du fourreau (18) au moyen du micromanipulateur;
h) fixer le support arrière (20) au bloc de fixation (14);
i) fixer le fourreau (8) au support arrière (20);
j) supprimer le couplage entre le fourreau (18) et le micromanipulateur.
